(19) **Europäisches Patentamt**
**European Patent Office**
**Office européen des brevets**

(11) **EP 3 584 177 B1**

(12) **EUROPEAN PATENT SPECIFICATION**

(45) Date of publication and mention
of the grant of the patent:
**22.11.2023 Bulletin 2023/47**

(21) Application number: **19382420.8**

(22) Date of filing: **27.05.2019**

(51) International Patent Classification (IPC):
***B64G 1/28*** *(2006.01)*

(52) Cooperative Patent Classification (CPC):
**B64G 1/283**

(54) **AEROSPACE INERTIAL ACTUATOR**

TRÄGHEITSAKTUATOR FÜR DIE LUFT- UND RAUMFAHRT

ACTIONNEUR D'INERTIE AÉROSPATIAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2018 ES 201800317 U**

(43) Date of publication of application:
**25.12.2019 Bulletin 2019/52**

(73) Proprietors:
• **Sanz-Aranguez Sanz, Pedro**
**28028 Madrid (ES)**
• **Ruano Poblador, Marco Antonio**
**28012 Madrid (ES)**

(72) Inventor: **SANZ-ARANGUEZ SANZ, Pedro
28028 Madrid (ES)**

(74) Representative: **Espiell Gomez, Ignacio
R. Volart Pons y Cia., S.L.
Pau Claris, 77 2o 1a
08010 Barcelona (ES)**

(56) References cited:
**EP-A1- 0 496 184     ES-U- 1 102 357
RU-C1- 2 403 190**

EP 3 584 177 B1

**Description**

**Sector of the Art.**

The present invention relates to an application which enables the attitude control (orientation control) of an aerospace platform where it can be found onboard. To achieve this attitude control, it applies the law of conservation of the kinetic momentum, without resorting therefore to the action of external torques. This application is an important extension of Spanish Utility Model U201300896 (ES11 02357U) for the purpose of extending the field of application thereof.

**State of the Art.**

Attitude control is absolutely necessary in space apparatus, launch vehicles and crafts to achieve orientation of their onboard equipment and the execution of manoeuvres.

The novelty of this invention lies in its ability to generate the required control torques, with an electromechanical device that is very lightweight and occupies a small volume compared to the mechanical arrangements currently in service with Reaction Wheel Assemblies (RW), Momentum Wheel Assemblies, and Control Moment Gyros (CMG).

Although the basic application of the invention is the control of agile satellites, the high control capacity thereof also makes it applicable to small space launch vehicles and small automatic crafts such as UAV (Unmanned Aerial Vehicle).

Agile satellites are those satellites which require a high angular pointing velocity of some of their axes, as well as a frequent demand for a change in direction of that pointing. Typical satellites with requirements of this type are most of those for observation from the Earth, whether military or civil.

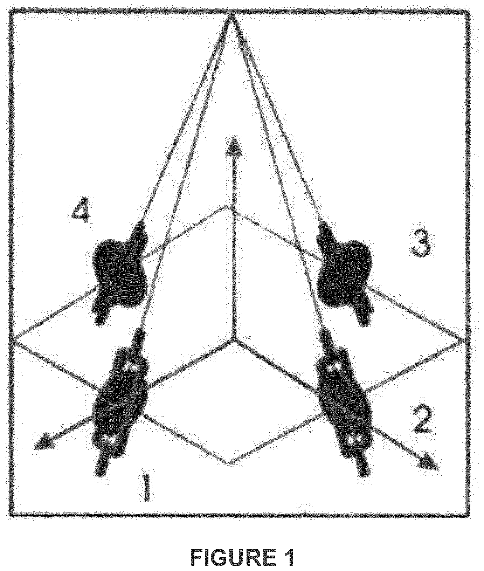

The high torques required for the mentioned manoeuvres can be obtained in two ways. One way is by means of micro-rockets, which involves, besides the cost, a large increase in weight and volume for the propellant, or another way is by means of the mentioned CMGs. To obtain a torque in any desired direction, a combination of 4 CMGs is generally used (Figure 1), which involves a very large volume and mass.

ES 1 102 357 U, from the same applicant, discloses a reaction wheel producing the third component in space. However, the reaction wheel is a heavy component and doesn't allow a high control capacity. Additionally, this invention only applies for spacecraft.

EP0496184 and US4078748 show another gyroscopic control devices for spacecraft with two gyroscopes for the two main components (dimensions) of space as in the preamble. However, this inventions don't comprise a secondary gyroscopic assembly producing the third component in space neither are applying to unmanned aerial vehicle.

However, in most cases of observation satellites, high velocities and high torques are required only for pointing towards a certain location of one of their axes which coincides with that of the (optical, electro-optical, radar, etc.) observation sensor. To that end, simply obtaining a torque of suitable magnitude with its vector located on the plane normal to the pointing direction is sufficient. However, the third torque component, the component necessary for rotating the plane of the image around the pointing axis, is much smaller than the previous ones and therefore smaller than those that CMGs can normally provide.

A similar situation occurs in mini-launch vehicles during stages in the upper atmosphere and higher. Now, their relatively small mass and the lack of aerodynamic moments make them susceptible to control by means of CMGs. Additionally, the torque required around the longitudinal axis in this case is much lower than the pitching and yaw moments, the vectors of which are located on the plane normal to that axis. In this case, the advantage of the invention lies in the savings in development time and money compared to the conventional method using control by rotation of the booster rocket nozzles.

Given their small mass, UAVs can in some cases, for example in automatic flights in adverse atmospheric conditions or for high manoeuvrability, take advantage of using a non-aerodynamic control, such as control with CMGs. This type of inertial control even allows the drastic reduction of the number of rotors in a multirotor.

The present invention therefore relates to performing control of the types of vehicles mentioned by inertial means, but with a mass and volume that are much lower than the conventional use of 4 CMGs in satellites and allowing in rockets and UAVs flight under extremely adverse atmospheric conditions, high manoeuvrability, and design simplicity in many cases.

**Detailed Description of the Invention**

The present invention proposes what is referred to as the aerospace inertial actuator (AIA) which will be carried out in two versions, with each one being applicable according to the objective that is proposed.

Version -1 (V1). This is a non claimed example.

It is provided with only 2 CMGs and one reaction wheel. The design and arrangement of these elements and their operating features will be such that the two required high torque components, usually pitching and yaw, will be obtained by means of the two relatively large control moment gyroscopes, referred to as CMG1. The third component, i.e., rotation, usually of a lower value, is obtained by means of the reaction wheel.

Version-2 (V2). This is provided with the two aforementioned large CMG1 and two similar ones of a smaller size, CMG2, for the third component of a lower value. Said Version-2 will be selected when the mass of the reaction wheel is excessive.

With the aerospace inertial actuator, (V1) will require 3 rotors and 5 large electric motors and (V2) will require 2 rotors with 4 larger motors and 2 rotors and 4 small motors, compared to the 4 rotors and 8 large engines in the conventional solution with 4 large CMCs, with the subsequent savings in mass, volume and energy.

Additionally, there is another reason for the savings in weight with this actuator. The gyroscopic assemblies of two CMGs in said actuator operate like a unit within the system. Therefore, by applying reliability standards whereby the system cannot fail due to a "single failure", each CMG pair must have another one to possibly replace it. However, since the two gyroscopes of the pair in this actuator are installed with the axes of nutation parallel to one another, it will be sufficient for that torque to have a single substitute and also parallel gyro, not two gyroscopes, to comply with the standard with a significant savings in weight.

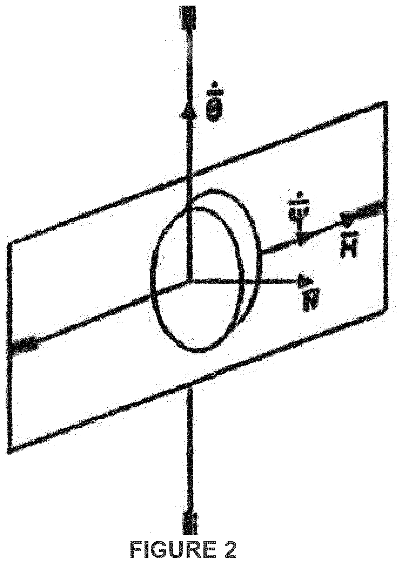

The functional description of the invention begins with the features of the gyro. In Figure 2, by changing the quantity of movement of the rotor of the CMG, and therefore of the entire vehicle, due to the principle of conservation of the quantity of movement in the absence of external torques, the vehicle must be move such that the total quantity of movement approaches its initial value. That movement is such that it seems to be produced by a virtual torque referred to as "gyroscopic torque". This is determined by the known expression:

$$\overline{N} = -\left(\dot{\overline{\theta}} x \overline{H}\right) \qquad [1]$$

where the angular kinetic momentum of the rotor $\overline{H}$, is determined by

$$\overline{H} = I\dot{\overline{\Psi}} \qquad [2]$$

$I$ being the axial moment of inertia of the disc, $\dot{\Psi}$ its axial rotation (spin) velocity, and $\dot{\theta}$ nutation velocity.

This torque has the direction and sense shown in Figure 2 and acts on the anchors of the gyroscopic assembly to the satellite, making it rotate accordingly.

The fundamental drawback for controlling with a single CMG is that the gyroscopic moment produced, $\overline{N}$, rotates on the plane perpendicular to $\overline{\theta}$ and with this same velocity. That is, it is necessary to develop a combined strategy of values of $\overline{H}$, $\dot{\theta}$ and the number and arrangement of gyroscopic elements to obtain a moment which acts in a controlled manner. This strategy is usually very complicated, involving complex solutions such as the conventional 4 CMGs of Figure 1, with their axes of nutation according to the edges of a four-sided pyramid.

The problem is drastically reduced with the aerospace inertial actuator object of this invention. The desired control torque is obtained with the simultaneous execution of three processes. With the first process and by means of two large CMG1, it can be achieved that the two components of the control torque on a known given plane have the desired direction and magnitude. In the second process, a pair of small CMG2 (V2), produce the third torque component required in the axis normal to the previous plane, the definition of the moment vector in space thus being completed. The third process, with its own computing means and using the basic data received from other equipment in the vehicle, prepares and transmits the orders to the motors of the CMG1 and to the CMG2, so they can carry out the suitable movements. The principles of these three processes are described in detail below.

Process-1. Production of a vector torque with constant direction on a known plane.

Version-1 and Version-2

This Process-1 is identical in both versions as it is applied equally to the 2 CMG1 of Version 1 and to the 2 CMG1 of Version-2.

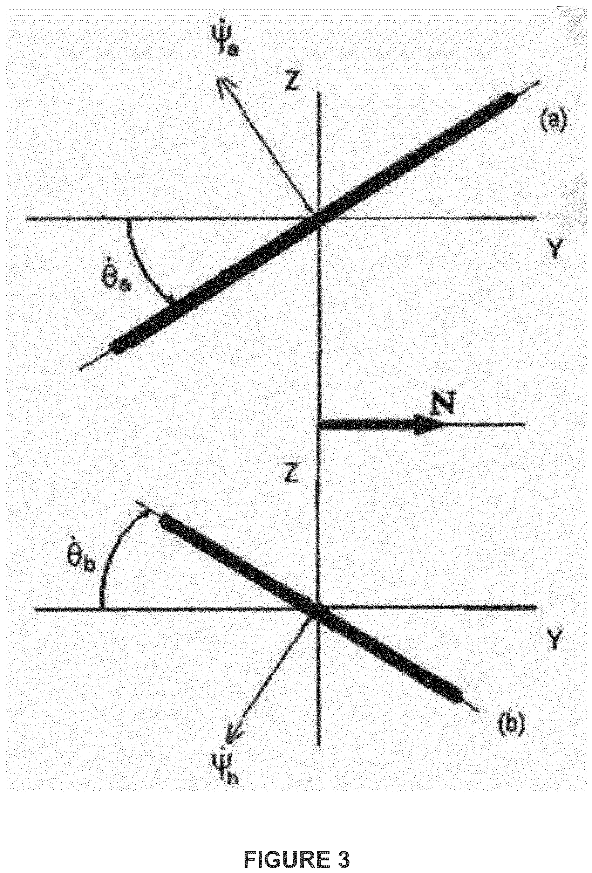

The two CMG1 of the aerospace inertial actuator are schematically depicted herein in Figure 3. The gyroscopic torque produced by each CMG1 is determined by equations [1] and [2].

It is found that, under stationary conditions, the torque resulting from the sum of both is a vector $\overline{N}$ constantly directed according to a normal to the direction of the nutation velocity vector and is located on the plane of the rotors when it coincides in the initial nutation position, $\theta_0$. Its value is:

$$N = 2H\dot{\theta}\cos(\theta(t) - \theta_0) \qquad [3]$$

For this to result, the following conditions must be met:

a) Equal values of the spin angular momentums of the rotors (a) and (b) but with a different sign:

$$H = H_a = I_a\dot{\Psi}_a = -H_b = -I_b\dot{\Psi}_b \qquad [4]$$

b) Equal absolute values of the nutation velocities of the two rotors:

$$\dot{\theta} = \dot{\theta}_a = -\dot{\theta}_b$$

c) Equal initial nutation angle:

$$\theta_0 = \theta_{a0} = -\theta_{b0} \qquad [6]$$

nutation, that is $\theta_0 = 0$, therefore the direction of the torque coincides with the Y-axis.

To demonstrate the preceding expression [3], simply applying the equations of the solid body dynamics is sufficient.

For the transformation of inertial X, Y, Z axes to mobile axes linked to the solid $X_1$, $Y_1$, $Z_1$, that corresponding to 3, 1, 3 type Euler angles is used.

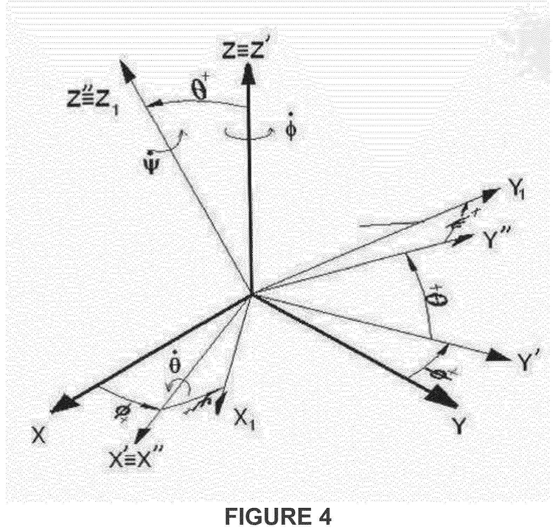

That is (see Figure 4)

1) Rotation around Z of value $\phi$ (precession)
2) Rotation around $X'$ of value: $\theta$ (nutation)
3) Rotation around $Z''$ of value: $\psi$ (spin)

A rigid solid is assumed, rotating with an angular velocity $\overline{\omega}$ to which the system of axes $(X_1, Y_1, Z_1)$ is rigidly attached.

The components of $\omega$ in the SRS (mobile) system are referred to as p, q, r. The solution of the rotational movement of a rigid solid to which there is applied a torque $\overline{N}$ so it would rotate with an angular velocity $\omega$ is known. However, instead of applying torque $\overline{N}$ to the solid, an angular velocity $\omega$ is imparted to it, whereby the body would react on a support with a torque $-\overline{N}$, which would be determined by the following equations:

$$I_1\dot{p} - (I_2 - I_3)qr = -N_1 = -N_{x''}$$
$$I_1\dot{q} - (I_3 - I_1)rp = -N_2 = -N_{y''} \qquad "[7]$$
$$I_3\dot{r} - (I_1 - I_2)pq = -N_3 = -N_{z''}$$

The components of this torque on the fixed axes (X, Y, Z) would be from $N_1$, $N_2$, $N_3$ in the form.

$$\begin{vmatrix} N_x \\ N_y \\ N_z \end{vmatrix} = R^T \begin{vmatrix} N_1 \\ N_2 \\ N_3 \end{vmatrix} \qquad "[8]"$$

$R^T$ being the transposition of the transformation matrix $R$ having the value for the 3-1-3 type rotation which is that used herein:

$$(9) \quad \begin{vmatrix} \cos\psi\cos\phi - \cos\theta\sin\psi\sin\phi & \cos\psi\sin\phi + \cos\theta\sin\psi\cos\phi & \sin\theta.\sin\psi \\ -\sin\psi\cos\phi - \cos\theta\cos\psi\sin\phi & -\sin\psi\sin\phi + \cos\theta\cos\psi\cos\phi & \sin\theta\cos\psi \\ \sin\theta\sin\phi & -\sin\theta\cos\phi & \cos\theta \end{vmatrix}$$

The components p, q, r of $\overline{\varpi}$ are determined as a function of the Euler angles and their derivatives by the expression:

$$\overline{\varpi} = \begin{vmatrix} p \\ q \\ r \end{vmatrix} = \begin{vmatrix} \dot{\phi}\sin\theta\sin\psi + \dot{\theta}\cos\psi \\ \dot{\phi}\sin\theta\cos\psi - \dot{\theta}\sin\psi \\ \dot{\phi}\cos\theta + \dot{\psi} \end{vmatrix} \quad [10]$$

In the basic actuator of Figure 3, precession is null, that is:

$$\dot{\phi} = 0 \qquad [11]$$

With this condition, along with [4], [5] and [6], obtained from equations [7], [8], [9] and [10] is a torque with null components on the X axis and on the YZ plane has the value given in [3] and a fixed direction which coincides with direction $\theta_0$, which in the case of Figure 3 coincides with the Y axis ($\theta_0 = 0.$)

It must be observed that for the basic case presented, equal axial moments of inertia or spin velocities of the rotors are not necessary, rather only equal kinetic momentums of spin ($\overline{H}_a = \overline{H}_b$)

The value of the torque can be readily controlled through the values which are ordered at the kinetic momentum of spin and the nutation velocity. As can be seen in formula [3], the value of this torque is proportional to the kinetic momentum of the rotor and the nutation velocity, but a factor appears which makes the modulus and sense of the torque change in a sinusoidal manner with the nutation angle. This is perfectly manageable with suitable software techniques.

With regard to the direction of the torque produced, it is found on the plane normal to the direction of the nutation velocity vector and its direction in that plane can be controlled by giving the suitable value to the initial nutation angle. To that end, simply having direct control over the initial condition nutation angles and therefore the direction of the torque throughout the nutation process, as well as over the velocities thereof, will be sufficient. This will allow varying those that are for control, if required.

It is important to indicate that with the conventional expression for the torque produced being equation (3):

$$N = 2H\dot{\theta}\cos\theta(t) \qquad (12)$$

where $\theta_0 = 0$ has been placed for simplification, the value of that torque is cyclical, with its direction being fixed. Although that is the normal use situation there is a method so that the torque in addition to direction is also constant in the modulus.

According to (4) $H = H_a = I_a\dot{\psi}_a = -H_b = -I_b\dot{\psi}_b =$ constant
and therefore if $\theta$ is made to vary in the form:

$$\dot{\theta} = \frac{\dot{\theta}_m}{\cos\theta(t)} \qquad (13)$$

torque $N$ is constant, with a value which will depend on the selected constant $\dot{\theta}_m$. A problem that arises is that at the ends of the nutation half cycles

$$\theta = \pm\frac{(2k+1)\pi}{2},$$

$\dot{\theta} = \infty$, whereby avoiding those points using the expression (13), changing it in those areas for $\dot{\theta}$ = const., for example. Despite this operating modality, it provides important advantages under certain circumstances.

Process-2. Production of a torque of constant direction coinciding with the nutation velocity of the CMGs.

Now this process is different in both versions.

Non-claimed Version-1

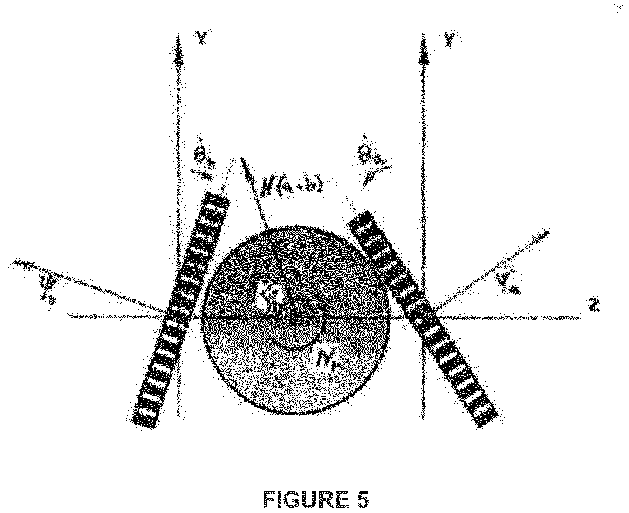

As set forth, considering that the demands regarding the magnitude of this torque would be low, it is obtained simply by means of a reaction wheel (RW). This wheel, with its axis of rotation parallel to the axes of nutation of the CMGs, as presented in Figure 5, is provided with an acceleration in rotation, thereby causing in the satellite, also due to the principle of conservation of kinetic momentum, a rotation in the direction opposite the acceleration vector of the reaction wheel equivalent to that which would have resulted from applying a "reaction torque" of value:

$$\overline{N}_r = -I_r\ddot{\overline{\varphi}}_r \qquad [13]$$

with $I$ and $\ddot{\overline{\varphi}}$ , respectively, being the axial moment of inertia and the spin velocity of the wheel. By suitably controlling the modulus and direction of that acceleration, the desired torque value will be obtained.

Version-2

This version is carried out for the purpose of increasing the application of HYGRA to satellites, and especially to UAVs, having larger masses for which in some cases RW should have an excessive weight. In this version, the RW is substituted with another pair of CMG2 similar to those used in Process-1 but smaller and adapted to the lower demands of rotation. The process would be similar to process 1, but placing this small pair of CMG2 with their axes suitably located (their axis of nutation normal to the axis of nutation of the pair of CMG1)

Process-3. Preparation of orders for the motors

Version

Version-1 and Version-2

This Process-3 is similar in both versions.

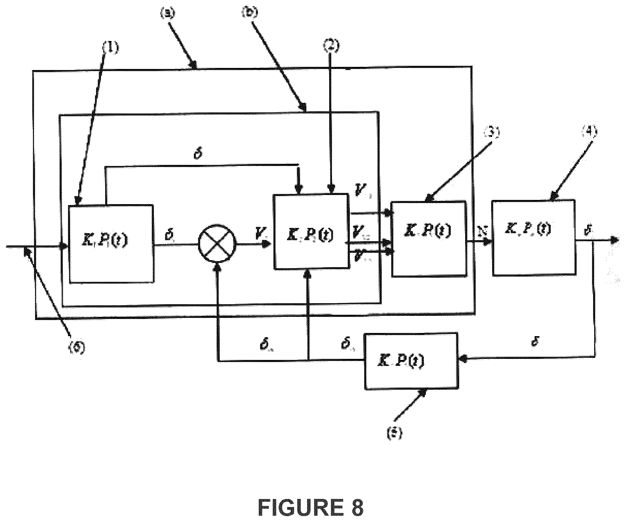

The orders for voltages and operating times for the electric motors of the CMGs or reaction wheel are prepared by the inertial hybrid actuator from general data and orders supplied by other equipment of the vehicle (Figure 8).

Basically, that external data refers to the attitude required for the vehicle, $\overline{\delta_r}$, the instant and duration of the manoeuvre to achieve it, and to the measured attitude $\overline{\delta_m}$.

In many cases, the equipment of the vehicle does not directly provide the required attitude, but rather only the information necessary for computing it (position vehicle, target position of the pointing, required observation frequency, etc.), and it is the actuator that will provide computing means for the determination thereof in a usable manner.

The specific orders for the motors will be prepared primarily depending on the differences between $\overline{\delta_r}$ and $\overline{\delta_m}$,

which must be annulled with the suitable guidance process, which is also the responsibility of the actuator.

It must be noted that in the diagram of Figure 8, the processes $P_1(t)$, represent temporal physical relationships which could be represented by continuous or discontinuous, linear or non-linear, algebraic or numerical or order logic algorithms of any type.

The GUIDANCE output, represented but its process $K_2P_2(t)$, will essentially depend on the $V_2$, but it may also depend directly on the attitudes required and measured, and in a different manner over time. Orders that are independent of the attitude could also be sent.

Resultant torque on the satellite

According to that set forth for Processes 1, 2 and 3, the torque obtained by means of the aerospace inertial actuator results in its basic form from the composition of two vectors. One vector is identical in both versions, having a large maximum value determined by equation [3] and with a vector located on the plane normal to the axis of nutation and directed according to the initial nutation angle. The other one of small value is determined in Version-1 by equation [13] and has a direction opposite to the angular acceleration vector of the reaction wheel and therefore parallel to the axis of nutation of the CMG1. In the Version-2, it is determined by the two small CMG2 and on a plane normal to the axis of nutation thereof which will contain the axis of nutation of the large CMG1.

The value of those two vectors is suitably varied in order to achieve the manoeuvre in the time and with the precision required.

**Description of the Drawings**

Before providing a detailed analysis of the invention, the following attached figures are described:

Figure 1 schematically depicts a conventional control system with 4 CMGs. In this configuration, the 4 nutation vectors are located in the edges of a four-sided pyramid.

Figure 2 schematically depicts a CMG1, that is, basically, a gyroscopic assembly integrated in the vehicle. According to the physical principle of conservation of the quantity of movement, if it is assumed that the rotor rotates with a spin velocity $\dot{\overline{\psi}}$ , kinetic momentum $\overline{H}$ and rotation in nutation $\dot{\overline{\theta}}$ , the gyroscopic torque $\overline{N}$ appears on the satellite, located on the plane normal to that formed by vectors $\dot{\overline{\psi}}$ and $\dot{\overline{\theta}}$ .

Figure 3 shows the operation of two CMGs in Process 1.

$\dot{\psi}_a$ and $\dot{\psi}_b$. Spin velocities of the CMGs
$\dot{\theta}_a$ and $\dot{\theta}_b$ Nutation velocities of the CMGs
$N_y$ Gyroscopic torque resulting from the two CMGs

Here the initial nutation angle is: $\theta_0 = \theta_{0a} = \theta_{0b} = 0$

The operation of the two small CMG2 in Process-2 of Version 2 would be similar but the nutation velocity thereof would be perpendicular to the *XZ* plane and the gyroscopic torque would usually be located according to X.

Figure 4 shows axes systems and transformation by Euler angles.

*X, Y, Z* Fixed axes
$X_1$, *Y1*, $Z_1$ Mobile axes
$\dot{\phi}$, $\phi$ Velocity and angle of precession
$\dot{\theta}$, $\theta$ Nutation velocity and angle,
$\dot{\psi}$, $\psi$ Spin velocity and angle

Figure 5 shows a simple diagram of the position of rotors of the CMGs and reaction wheel in an inertial hybrid actuator, Version-1, Processes 1 and 2)

$\dot{\psi}_a$ and $\dot{\psi}_b$ Spin velocities of the CMGs
$\dot{\theta}_a$ and $\dot{\theta}_b$ Nutation velocities of the CMGs
$\dot{\psi}_r$ Spin velocity of the reaction wheel
$N_{(a+b)}$ Gyroscopic moment resulting from the two CMGs
$N_r$ Reaction moment of the reaction wheel

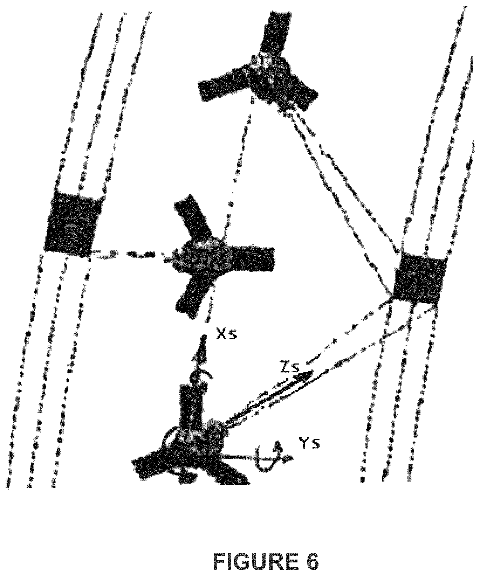

Figure 6 shows a diagram of manoeuvres of an agile observation satellite. The depicted axes are the axes fixed to the satellite which at the start of the manoeuvre correspond to:

$X_s$ Roll axis. Coincides with the velocity of the satellite.
$Y_s$ Pitching axis. This is normal to the plane of the path.
$Z_s$ Yaw axis. Normal to the other two directed towards the ground (nadir).
It must be noted that these conventional spatial names do not coincide with the dynamics used in the analysis of the inertial hybrid actuator, where:

$$X_S \equiv Z \,, \qquad Y_S \equiv -Y \,, \qquad Z_S \equiv X$$

In a UAV, the axes fixed to the vehicle would be to a certain extent similar to those of the satellite.
$X_v$ Roll axis. Parallel to that of the fuselage going through the centre of gravity.
$Y_v$ Pitching axis. Parallel to that of the wing going through the centre of gravity.
$Z_v$ Yaw axis. Normal to the other two directed upwards.

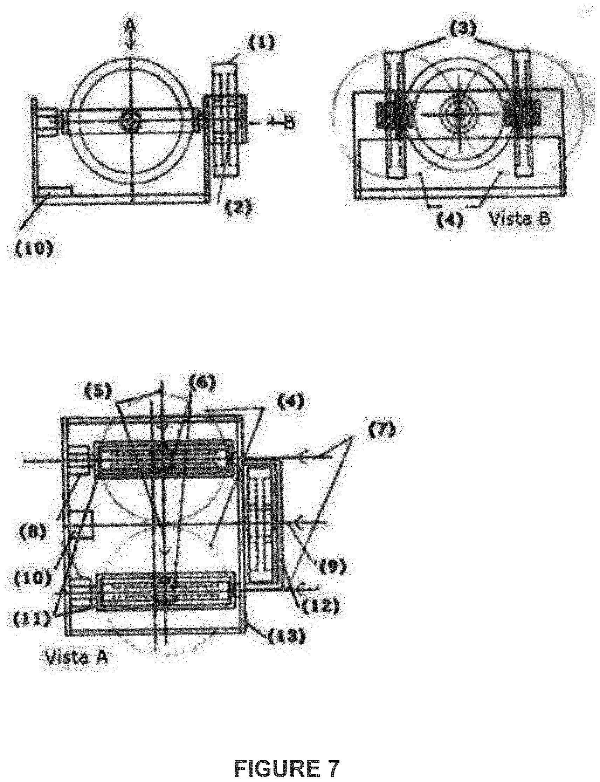

Figure 7 depicts a diagram of the basic object of a non claimed example which integrates two CMG1, the reaction wheel, the microprocessor and supports:

(1) Rotor of the reaction wheel
(2) Spin motor of the reaction wheel
(3) Rotors of the CMG1
(4) Enclosure of the position of the rotors in nutation
(5) Vectors of the spin velocities of the CMG1 ($\dot{\psi}_a$ and $\dot{\psi}_b$)
(6) Spin motors of the CMG1
(7) Vectors of the nutation velocities of the CMG1 ($\dot{\theta}_a$ and $\dot{\theta}_b$)
(8) Nutation motors of the CMG1

(9) Vector of the spin velocity of the reaction wheel ( $\dot{\bar{\psi}}_r$ )
(10) Microprocessor
(11) Supports of the rotors of the CMG1
(12) Support of the reaction wheel
(13) Structural support system attached to the satellite

Figure 8 shows a functional diagram of the AIA (aerospace inertial actuator)

(a) AIA
(b) Microprocessor (processes the data and orders for CMGs and RW

(1) Adaptor for the general data and orders received from the satellite
(2) Guidance. Generation of direct orders to the electromechanical system
(3) Electromechanical system: Version-1 (2 CMG1 + 1 RW), Version 2 (2 CMG1 and 2 CMG2)
(4) Satellite. Position and dynamics in response to the torques of the aerospace inertial actuator.
(5) Sensor. Measures angular position and velocities of the satellite
(6) Sending general data and orders from the satellite

$\overline{\delta_r}$ Attitude required for the satellite
$\overline{\delta_m}$ Attitude measured by the sensor
$V_2$ Error in the attitude of the satellite
$V_{3t}$ Order to the actuator generated by GUIDANCE.
Generically, the orders are:

$V_{31}$ to the nutation motors of CMG (2 (V1) or 4 (V2) motors)
$V_{32}$ to the spin motors of the CMG (2 (V1) or 4 (V2) motors)
$V_{33}$ to the spin motor of the reaction wheel (only V1)

$\overline{N}$ Virtual torque generated by the AIA.

$\overline{\delta}$ Actual attitude of the satellite

$\dot{\overline{\delta}}$ Actual angular velocity of the satellite

$\overline{\delta_m}$ Attitude of the satellite measured by the sensor

$K_1$, $K_2$, $K_3$, $K_4$, $K_5$: Gains of each block of the process

$P_{1(t)}$ Process of adapting general data and orders received

$P_{2(t)}$ Guidance process

$P_{3(t)}$ Process of generating torques N by the AIA.

$P_{4(t)}$ Process generating the movement of the satellite from N

$P_{5(t)}$ Measurement process

## Detailed Description of an Embodiment of the Invention

The description presented is based on Version-1 applied to a satellite, indicating where necessary the difference that is introduced by Version 2.

Figure 6 schematically shows conventional pointing manoeuvres of an agile satellite, with the axes being depicted, before the manoeuvre.

$X_S$ Roll axis. Coincides with the velocity of the satellite.

$Y_S$ Pitching axis. Normal to the plane of the path.

$Z_S$ Yaw axis. Normal to the other two directed towards the ground (nadir)

It must be noted that these conventional spatial names do not coincide with the dynamics used in the analysis of the inertial hybrid actuator, where:

$$X_S \equiv Z \,, \qquad Y_S \equiv -Y \,, \qquad Z_S \equiv X$$

That is, in the satellite the axis of nutation of the gyroscopes and the axis of the reaction wheel must be parallel to satellite axis $Z_s$ (nadir under initial conditions)

A typical manoeuvre is to perform a rapid rotation of the pointing axis from a given point of the Earth to another. It could be said that under initial conditions, before performing any manoeuvre, the pointing axis is axis $Z_S$, nadir, which is pointing at the suborbital points of the Earth as the satellite travels in its orbit. To perform angular displacement of the pointing axis, simply applying suitable torque with direction vector located on the $X_S Y_S$ plane will be sufficient.

It will be the third component of the torque, that of the wheel with a coinciding axis or parallel to the pointing axis itself, that will, without any significant magnitude demands, make the adjustment of the plane of vision around that axis. If the torque is larger than that which is suited to an RW, Version 2 must have been selected, substituting RW with torque CMG2.

To perform manoeuvres like those indicated in Figure 7, a suitable model of the aerospace inertial actuator (V1) is presented. The nutation and spin velocities in the figure are those used for computing the sum torque of the CMGs from expression [3].

In V2, the pair of CMG1 would be that of Figure 7 after eliminating the RW.

As the angular velocity of the satellite in the manoeuvre does not entail external torques with respect to the system, it is determined according to the principle of conservation of the quantity of movement, by the equation:

$$\frac{d\overline{H}_S}{dt} = 0 \qquad\qquad [14]$$

$\overline{H}_S$ is the angular kinetic momentum of the entire satellite, including the inertial hybrid actuator, and equation [14] can be written as the sum of the variation of kinetic momentum of the actuator plus that of the rest of the satellite:

$$\dot{\overline{H}}_S = \dot{\overline{H}}_G + \dot{\overline{H}}_{S1} \qquad\qquad [15]$$

The angular kinetic momentum of the actuator can be expressed as the sum of the moment thereof relative to the satellite, plus that corresponding to the movement thereof as a part fixed to the moving satellite, that is:

$$\bar{H}_G = \bar{H}_{GR} + \bar{H}_{GS} \qquad [16]$$

and by substituting [16] in [15]:

$$\dot{\bar{H}}_S = \left(\dot{\bar{H}}_{GR} + \dot{\bar{H}}_{GS}\right) + \dot{\bar{H}}_{S1} = \dot{\bar{H}}_{GR} + (\dot{\bar{H}}_{GS} + \dot{\bar{H}}_{S1}) = \dot{\bar{H}}_{GR} + \dot{\bar{H}}_{S0} \qquad [17]$$

where $\bar{H}_{S0}$ is the kinetic momentum of the satellite including the actuator in standby with respect to the satellite.

By applying [14] to [17]:

$$\dot{\bar{H}}_{S0} = -\dot{\bar{H}}_{GR} \qquad [18]$$

with

$$\dot{\bar{H}}_{S0} = I_{S0}\dot{\bar{\omega}}_S \qquad [19]$$

where $I_{S0}$ is the inertia tensor of the satellite with the actuator in standby and $\bar{\omega}_S$ is the angular velocity of the satellite.

Likewise:

$$-\dot{\bar{H}}_{GR} = -I_G\dot{\bar{\omega}}_{GR} \qquad [20]$$

where $I_G$ is the inertia tensor of the actuator and $\bar{\omega}_{GR}$ are the angular velocities of the components of the actuator with respect to the satellite. These are the ones previously analysed: $\dot{\psi}_a$ and $\dot{\psi}_b$ are the spin velocities of the CMGs, $\dot{\theta}_a$ and $\dot{\theta}_b$. nutation velocities of the CMGs, and $\dot{\psi}_r$ is the spin velocity of the reaction wheel in V1. In V2, $\dot{\psi}_r$ would be substituted with the velocities of CMG2, $\dot{\psi}_{a2}$, $\dot{\psi}_{a2}$, $\dot{\theta}_{a2}$ and $\dot{\theta}_{a2}$. Therefore $-\dot{\bar{H}}_{GR}$ is the torque of the actuator, $\bar{N}_a$ determined by the sum of expressions [3] and [13] relative to the CMGs and the reaction wheel: - 2]

Version-1

$$-\dot{\bar{H}}_{GR} = \bar{N}_a = \bar{N} + \bar{N}_r \qquad [21-1]$$

Version-2

$$-\dot{\bar{H}}_{GR} = \bar{N}_a = \bar{N} + \bar{N}_2 \qquad [21-2]$$

From [18], [19], [20] and [21]:

Version-1

$$I_{S0}\,\dot{\bar{\omega}}_S = \bar{N} + \bar{N}_r \qquad\qquad [22\text{-}1]$$

Version-2

$$I_{S0}\,\dot{\bar{\omega}}_S = \bar{N} + \bar{N}_2 \qquad\qquad [22\text{-}2]$$

which is the equation which supplies rotation velocities of the satellite and is developed with known mathematical expressions.

By analysing torque $\bar{N}$ of equations [3], [21] and [22] supplied by the CMGs, the variation in [3] is sinusoidal and therefore the angular movement of the pointing axis of the satellite will be as well. Otherwise, limits are placed on nutation, 6, the pointing axis will oscillate around the initial point without achieving a practical result.

A simple way to achieve the desired pointing is by making the actuator operate during a given time until reaching a nutation angle within limits ($\theta_0 \pm \pi/2$). By deactivating the actuator when a suitable velocity is reached, the satellite is allowed to continue rotating at that constant velocity until achieving an angle suitable for ordering the actuator to be activated again but with a torque in opposite sense, until achieving the detention of the pointing axis in the desired position. This process can be achieved by developing the suitable software without any considerable problems.

The general process for control of the satellite whereby the movement orders for the components of the actuator are prepared and performed is presented in Figure 8.

This flowchart shows components of the guidance and control system of the satellite including this type of actuator, and the meaning of each symbol was provided above in the specific description of this Figure 8.

The basic blocks are: the actuator (a) itself, which includes the electromechanical system (3) formed by CMG1 and the CMG2 assembly and the electronic system or microprocessor (b). In the latter, there are included the functions for the adaptation of general data and orders of the satellite (1) and the guidance (2) which generates the direct orders for the motors of the CMG1 and of the CMG2 until the error ($V_2$) between the required and measured position of the satellite is less than a given preset value. This specific software is carried out as a function of the features of the satellites to which it is directed.

This process must be applied in a number of stages during development, logically with different computation and simulation tools. It can be used for studying the system with a full software simulation, not in real time, or in a laboratory with HWIL (Hardware In the Loop) type simulations, by introducing flight equipment and real time software in the loop, and finally, for the flight system with the final equipment, microprocessors and software in real time.

Logically the physical phenomena of the actual actuator will be analysed in the previous process in the actual dimension thereof by introducing normal and transient cases, for example non-constant spin and nutation, of operation for which the complete equations herein set forth must be used, obtaining real results which may additionally offset one another.

In non claimed examples the application of this actuator extends to other agile satellites different from that herein considered, as well as to other space vehicles such as mini-space launch vehicles and small crafts such as UAVs.

**Claims**

1. An aerospace inertial actuator, comprising:

   - a main gyroscopic assembly comprising a first two paired gyroscopes (CMG1) providing a first torque in two components of space, with the following conditions:
   - each gyroscope (CMG1) is provided with a rotor (3), spin motor (6), nutation motor (8) and support (11);
   - the axes of nutation (7) of both gyroscopes are parallel, said gyroscopes producing a vector control torque of a known fixed direction, located on the plane normal to the axis of nutation (7) thereof,
   - a secondary gyroscopic assembly providing a second torque in a third component of space perpendicular to the main gyroscopic assembly.
   - electronic computing and control means (10);
   - mechanical support and holding means (13);

   wherein the secondary gyroscopic assembly comprises a second two paired gyroscopes (CMG2) of the same type having a dimensional size smaller than the dimensional size of the first two paired gyroscopes (CMG1) such that the torque of the second two paired gyroscopes (CMG2) has a lower value compared to the torque of the first two paired gyroscopes (CMG1).

2. The aerospace inertial actuator according to Claim 1, having electronic computing and control means made up of a microprocessor (10) with software and connections with the capacity to accept, prepare and supply the orders to the rest of the equipment of the actuator.

3. The aerospace inertial actuator according to Claim 1 or 2, having mechanical support and holding means (13) for the components of the actuator with respect to one another, capable of transmitting thereto the generated torques.

**Patentansprüche**

1. Trägheitsaktuator für die Luft- und Raumfahrt, umfassend:

   - eine Hauptkreiselanordnung, die zwei erste gepaarte Kreisel (CMG1) umfasst, die ein erstes Drehmoment in zwei Raumkomponenten mit den folgenden Bedingungen bereitstellen:
   - jeder Kreisel (CMG1) ist mit einem Rotor (3), einem Drehmotor (6), einem Nutationsmotor (8) und einer Halterung (11) versehen;
   - die Nutationsachsen (7) beider Kreisel sind parallel, wobei die Kreisel ein vektorielles Steuerdrehmoment mit einer bekannten festen Richtung erzeugen, die in der Ebene senkrecht zu ihrer Nutationsachse (7) verläuft,
   - eine sekundäre Kreiselanordnung, die ein zweites Drehmoment in einer dritten Raumkomponente senkrecht zur Hauptkreiselanordnung bereitstellt;
   - elektronische Datenverarbeitungs- und Steuermittel (10);
   - mechanische Stütz- und Haltemittel (13);

   wobei die sekundäre Kreiselanordnung zwei zweite gepaarte Kreisel (CMG2) der gleichen Art umfasst, deren Abmessung kleiner als die Abmessung der ersten beiden gepaarten Kreisel (CMG1) ist, sodass das Drehmoment der zweiten beiden gepaarten Kreisel (CMG2) im Vergleich zum Drehmoment der ersten beiden gepaarten Kreisel (CMG1) einen niedrigeren Wert aufweist.

2. Trägheitsaktuator für die Luft- und Raumfahrt nach Anspruch 1, der über elektronische Datenverarbeitungs- und Steuermittel aufweist, die aus einem Mikroprozessor (10) mit Software und Verbindungen mit der Fähigkeit bestehen, Befehle anzunehmen, aufzubereiten und der übrigen Ausrüstung des Aktuators zuzuführen.

3. Trägheitsaktuator für die Luft- und Raumfahrt nach Anspruch 1 oder 2, der mechanische Stütz- und Haltemittel (13) für die Komponenten des Aktuators in Bezug zueinander aufweist, die in der Lage sind, die erzeugten Drehmomente auf diese zu übertragen.

**Revendications**

1. Actionneur inertiel aérospatial, comprenant :

   - un ensemble gyroscopique principal comprenant des premiers deux gyroscopes appariés (CMG1) fournissant un premier couple dans deux composantes de l'espace, avec les conditions suivantes :
   - chaque gyroscope (CMG1) est pourvu d'un rotor (3), d'un moteur de rotation (6), d'un moteur de nutation (8) et d'un support (11) ;
   - les axes de nutation (7) de l'un et l'autre des gyroscopes sont parallèles, lesdits gyroscopes produisant un couple de contrôle vectoriel d'une direction fixe connue, située sur le plan normal à l'axe de nutation (7) de ceux-ci,
   - un ensemble gyroscopique secondaire fournissant un deuxième couple dans une troisième composante d'espace perpendiculaire à l'ensemble gyroscopique principal ;
   - des moyens électroniques de calcul et de contrôle (10) ;
   - des moyens mécaniques de support et de maintien (13) ;

   dans lequel l'ensemble gyroscopique secondaire comprend des deuxièmes deux gyroscopes appariés (CMG2) du même type ayant une taille dimensionnelle inférieure à la taille dimensionnelle des premiers deux gyroscopes appariés (CMG1) de telle sorte que le couple des deuxièmes deux gyroscopes appariés (CMG2) a une valeur inférieure par rapport au couple des premiers deux gyroscopes appariés (CMG1).

2. Actionneur inertiel aérospatial selon la revendication 1, ayant des moyens électroniques de calcul et de contrôle constitués d'un microprocesseur (10) avec logiciel et des connexions avec la capacité d'accepter, de préparer et de fournir les commandes au reste de l'équipement de l'actionneur.

3. Actionneur inertiel aérospatial selon la revendication 1 ou 2, ayant des moyens mécaniques de support et de maintien (13) pour les composants de l'actionneur les uns par rapport aux autres, capables de transmettre à ceux-ci les couples générés.

FIGURE 1

FIGURE 2

FIGURE 3

FIGURE 4

**FIGURE 5**

**FIGURE 6**

FIGURE 7

FIGURE 8

**EP 3 584 177 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES U201300896
- ES 1102357 U
- EP 0496184 A
- US 4078748 A